Europäisches Patentamt

European Patent Office

Office européen des brevets

(11) Publication number: **0 110 631**
**B1**

(12) **EUROPEAN PATENT SPECIFICATION**

(45) Date of publication of patent specification: **27.08.86**

(21) Application number: **83307028.7**

(22) Date of filing: **17.11.83**

(51) Int. Cl.⁴: **B 60 R 19/02**

(54) **Vehicle bumpers.**

(30) Priority: **17.11.82 GB 8232762**

(43) Date of publication of application:
**13.06.84 Bulletin 84/24**

(45) Publication of the grant of the patent:
**27.08.86 Bulletin 86/35**

(84) Designated Contracting States:
**DE FR IT**

(56) References cited:
**DE-A-1 902 391**
**DE-C- 483 044**
**FR-A-2 443 351**
**US-A-1 584 081**

(73) Proprietor: **AUTOMOBILES PEUGEOT**
**75, avenue de la Grande Armée**
**F-75116 Paris (FR)**
(73) Proprietor: **AUTOMOBILES CITROEN**
**62 Boulevard Victor-Hugo**
**F-92200 Neuilly-sur-Seine (FR)**

(72) Inventor: **Williams, David Vaughan**
**11, Gibbit Hill Road**
**Coventry West Midlands (GB)**

(74) Representative: **Bayliss, Geoffrey Cyril et al**
**BOULT, WADE & TENNANT 27 Furnival Street**
**London EC4A 1PQ (GB)**

## Description

This invention relates to vehicle bumpers.

More specifically the invention relates to a vehicle bumper comprising a rigid elongate tube, attachment means for mounting the tube on a vehicle body, a plastics bumper shaped moulding extending along the tube and mounting means attaching the moulding to the tube transmit an impact on the moulding to the tube, both the attachment means and mounting means receiving the tube without penetrating the tube wall.

Such a bumper construction is known for DE—A—1902391. In that construction, the bumper moulding is attached to the tube by means of brackets to which the moulding is bolted and which themselves are bolted to the tube by bolts extending through the tube wall. It is highly undesirable to penetrate the tube wall because of the resulting weakening of the tube and it is also desirable to provide a simpler form of mounting for the bumper moulding on the tube which can readily be assembled without the need for attachment means such as bolts and which, at the same time, transmits impact from the bumper moulding to the tube.

In accordance with the invention, the mounting means for mounting the bumper moulding on the tube comprise a bracket attached to the centre of the bumper moulding and having an aperture through which the tube extends to receive and locate the bracket on the tube, the bracket having at least one abutment adjacently aperture and facing away from the bumper moulding to bear against the tube to transmit an impact on the bumper moulding through the bracket to the tube.

The bracket may comprise a U-shaped bracket having a base connected to the bumper moulding at the centre thereof and a pair of resilient arms having apertures therein through which the tube extends, the resilient arms, in their relaxed condition, being angled with respect to one another to grip the tube, the bracket being assembled on the tube by holding the arms in parallel relationship to allow the bracket to slide over the tube. The beam can thereby be joined to the bumper in a simple and rapid hand operation.

The following is a description of a specific embodiment of the invention, reference being made to the accompanying drawings in which:

Figure 1 is a perspective view of a motor vehicle bumper assembly including a bumper shaped plastics moulding and reinforcing tube;

Figure 2 is a perspective view of a part of the reinforcing tube and a bracket for connecting the tube to the centre of the bumper mouldings;

Figure 3 is a perspective view of the tube and attachment arms for connecting the tube to the vehicle structure;

Figure 4 is a detailed perspective view of the attachment of an arm to the tube and the bumper moulding to the attachment between the arm and the tube;

Figure 5 is a perspective view of a central part of the bumper assembly; and

Figures 6 to 9 are further detailed views of the assembly.

Referring to the drawings, there is shown a vehicle bumper assembly comprising a moulded plastics (e.g. PP/EPDM i.e. Polypropylene/ ethylenepropylene terpolymer) channel section wrap-round bumper moulding 10 having upper and lower walls 10a and 10b mounted on and supported by a reinforcing beam 11. The beam 11 is a rigid glass fibre reinforced plastics pultrusion which may be a closed-section, for example, a square-section tube. The tube wall is free of any opening or aperture through the wall which would weaken the tube.

The bumper moulding 10 comprises a main part 12 which is slightly bowed in plan view to extend across the front of the vehicle and "wrap-round" ends 13 to protect the forward corners of the vehicle. On the inside of the channel of the main part 12 of the moulding there is a raised rib or ribs 14 extending in the plane of the beam and against which the tube 11 engages. As a result of the bowing of the main part of the moulding 12 (and practical limitation on the depth of the ribs relative to the wall thickness which is feasible), the ends of the tube 11 bear against the inside of the moulding whereas the central part of the tube is spaced from the central part of the moulding.

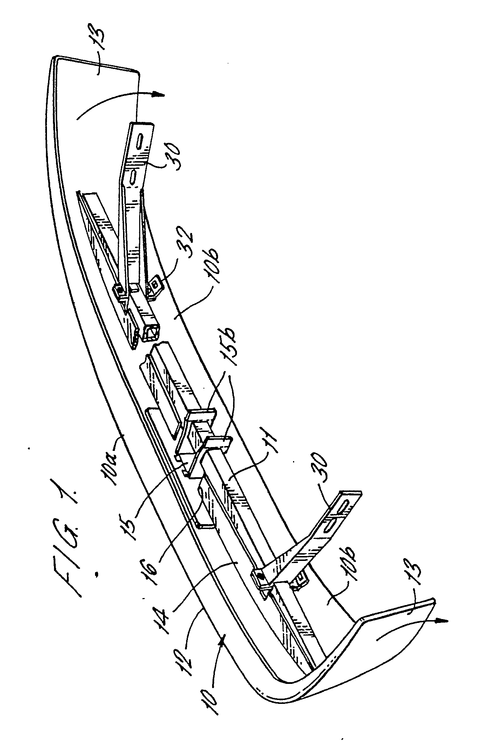

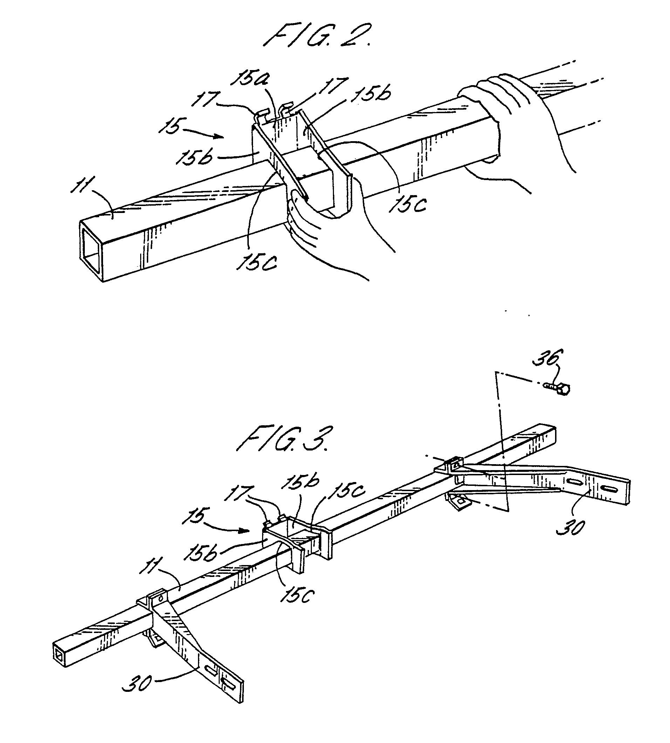

At the centre of the tube 11 there is a U-shaped moulded resilient plastics (e.g. polypropylene) bracket 15 comprising a base 15a and legs 15b. The legs 15b have square apertures 15c which are slightly oversize from the tube 11 and, in its natural state, the legs 15b diverge slightly away from the base. This also enables the aperture to be produced in the legs in a simple moulding tool for the bracket since the apertures can be formed without the need for elements in the mould having to move in a direction transverse to the direction of opening and closing of the mould. The bracket is mounted on the tube by holding the legs parallel and threading the tube through the openings 15c in the legs as illustrated in Figure 2 to locate the bracket at the centre of the tube. When released, the legs move apart slightly to grip the tube in the holes 15c. The bracket 15 is located on the tube with the base 15a on the forward side of the tube to bear on the inner side of the bumper moulding 12 at the centre thereof and the flange 14 is cut-away as indicated at 16 at the centre to provide clearance for the bracket.

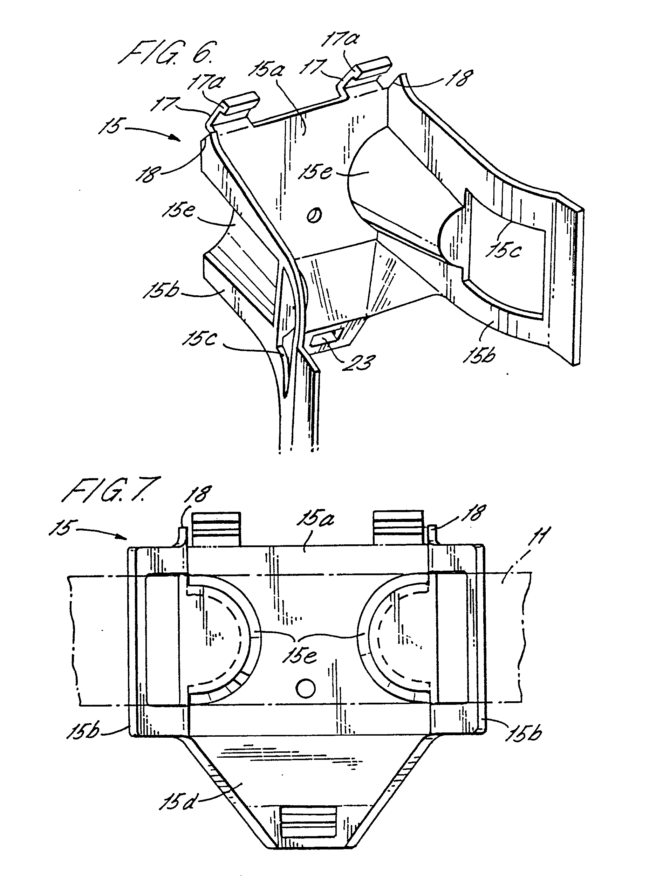

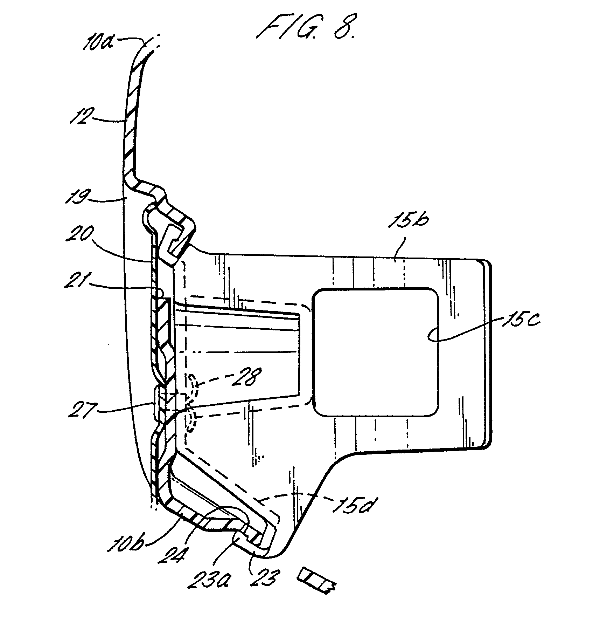

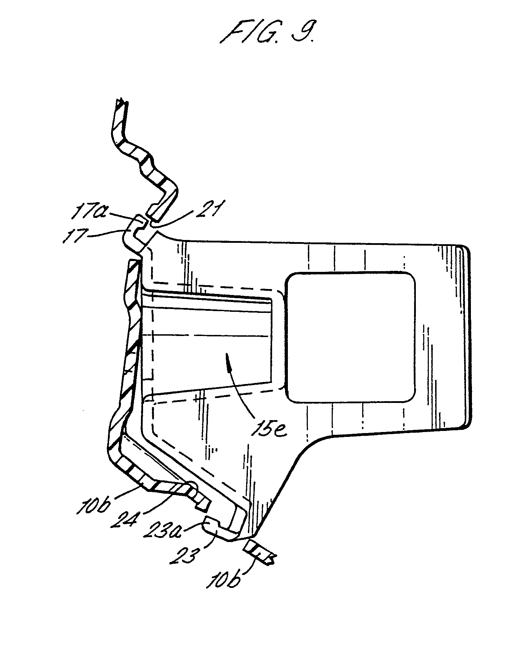

Referring now to Figures 6 to 9, the base 15a of the bracket is formed with a pair of upstanding inclined tabs 17 which terminate in heads 17a and the legs 15b of the bracket are extended above the top edge of the base to form shoulders 18 spaced outwardly of and facing in the opposite direction to the tabs 17. The bumper moulding 12 is formed with a rectangular recess 19 along the central part of the forward side of the moulding to receive a number plate 20 for the vehicle and the base of the recess is formed with slots 21 through which the tabs 17 extend to lock into recesses 22 in the bumper moulding. The edges of the moulding above the slots are thus trapped between the tabs 17 and shoulders 18 on the bracket 15.

The lower part of the base 15a of the bracket has a downwardly and rearwardly inclined wall 15d which follows the inside of the lower channel wall 10b of the bumper moulding. The lower end of the base wall 15d is formed with a tab 23 which engages over an edge portion of the channel wall 10b and the tab is formed with a head 23a at its free end to snap into a recess 24 in the outer face of the channel wall 10b. The legs 15b of the bracket are formed with buttresses 15c between the base 15a and openings 15c to bear on the beam 11 and transmit impact from the bumper moulding to the rigid tube.

The base 15 is connected to the inside of the bumper moulding 10 as illustrated in Figure 9. The tabs 17 are located in the slots 21 and the base is then raised to snap the heads 17a on the tabs into the recesses 22 and, at the same time, to snap the head of lower tab 23 into recess 24 in the channel bottom wall 10b. The base 15a is then fastened to the moulding 10 and a number plate 20 is fastened to the front face of the moulding in the recess 19 of the moulding by a flat headed staple 27 which is passed through apertures in the number plate, bumper moulding and base. The staple has legs 28 the free ends of which project through the base 15a and are turned outwardly as can be seen in Figure 8 to lock the assembly together.

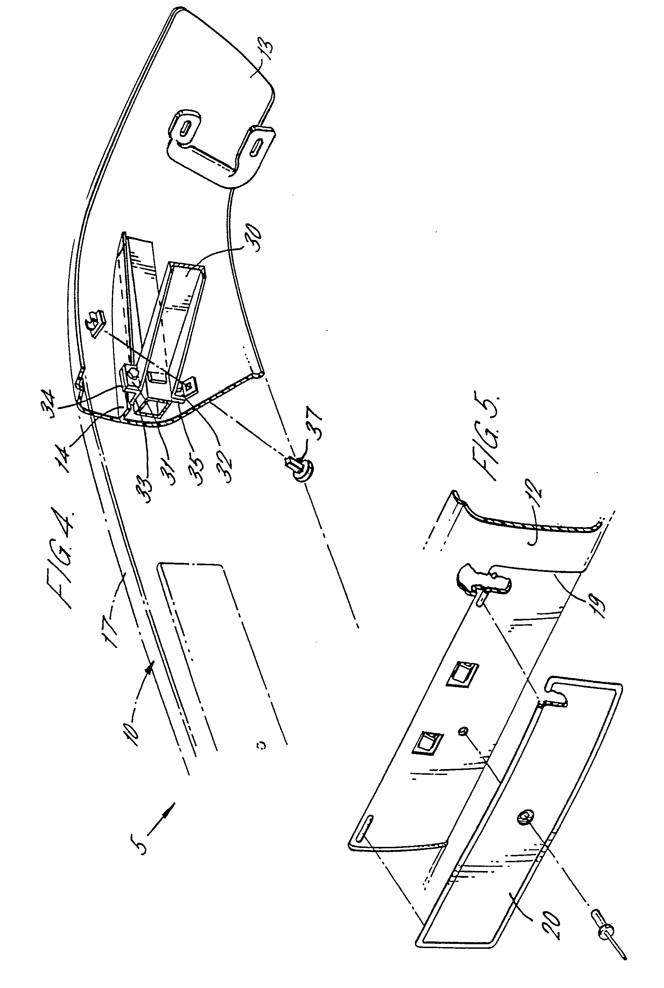

Referring again to Figures 1, 3 and 4, the tube 11 is mounted on the vehicle structure by means of a pair of arms 30 attached to the tube intermediate the centre and outer ends of the tube and extending rearwardly of the above for attachment to parts of the vehicle structure not shown. The forward end of each has upper and lower lugs 31, 32 and each arm is attached to the tube 11 by means of a stirrup-shaped bracket 33 which extends around the tube and has corresponding upper and lower lugs 34, 35 attached to the lugs 31, 32 of the arm by bolts 36. The lower lugs 32, 35 of the arm and bracket are extended downwardly to bear on the inside bottom wall 10b of the bumper moulding and the moulding is attached to the lugs by a fastening device 37.

The rigid tube which reinforces the bumper moulding 10 is thus mounted on the vehicle body and the moulding is attached to the tube without the need for any aperture through the tube wall which would weaken the tube. The central attachment bracket 15 between the tube and the bumper moulding spans the gap between the bumper moulding and reinforcing tube at the centre thereof to transmit external impacts on the moulding of the tube. The rigid tube reinforcing the bumper moulding 10 provides a stong buffer for resisting impact. The bracket and arm attachments to the tube and moulding can be quickly and simply assembled. The number plate or possibly another trim or decoration element covers the lugs 17 projecting tabs extending through the slots in the bumper moulding and assists in holding the tabs engaged over the slot edges.

**Claims**

1. A vehicle bumper comprising a rigid elongate tube (11), attachment means (3) for mounting the tube on a vehicle body, a plastics bumper shaped moulding (10) extending along the tube and mounting means (15) attaching the moulding to the tube to transmit an impact on the moulding to the tube, both the attachment means and mounting means receiving the tube without penetrating the tube wall, characterised in that the mounting means comprise a bracket (15) attached to the centre of the bumper moulding and having an aperture (15a) through which the tube extends to receive and locate the bracket on the tube, the bracket having at least one abutment (15e) adjacent the aperture and facing away from the bumper moulding (10) to bear against the tube (11) to transmit an impact on the bumper moulding through the bracket to the tube.

2. A vehicle bumper as claimed in claim 1, characterised in that the bracket (15) comprising a U-shaped bracket having a base (15a) connected to the bumper moulding (10) at the centre thereof and a pair of resilient arms (15b) having apertures (15c) therein through which the tube (11) extends, the resilient arms, in their relaxed condition, being angled with respect to one another to grip the tube, the bracket being assembled on the tube by holding the arms in parallel relationship to allow the bracket to slide over the tube.

3. A vehicle bumper as claimed in claim 2, characterised in that each arm (15b) has an abutment (15e) extending between the base (15a) of the bracket and the adjacent edge of the aperture (15c) in the arm for the tube (11) to transmit impact from the bumper moulding to the tube.

4. A vehicle bumper as claimed in claim 2 or claim 3, characterised in that the base (15a) of the bracket (15) is formed with gripper means to engage the bumper moulding and hold the moulding to the bracket.

5. A vehicle bumper as claimed in claim 4, characterised in that the gripper means comprise one or more tabs (17, 23) on the bracket formed with detents to inter-lock with a corresponding spaced part or parts of the bumper moulding to hold the bracket and moulding together.

6. A vehicle bumper as claimed in claim 4 or claim 5, characterised in that fastening means (27, 28) are also provided for attaching the bumper moulding (10) to the bracket (15).

7. A vehicle bumper as claimed in any of the preceding claims characterised in that the bumper moulding (10) has an elongate flange (14) extending along the rearward side thereof against which the tube (11) bears.

8. A bumper moulding as claimed in any of the preceding claims, characterised in that the bumper (10) is bowed as viewed in plan so that the ends of the tube (11) bear against the bumper moulding (10) towards the ends thereof and said mounting means (15) connects the centre of the bumper moulding to the tube.

9. A vehicle bumper as claimed in any of the preceding claims, characterised in that the attachment means (30) for mounting the tube (11) on the vehicle structure comprise arms (30) extending transversely to the tube adjacent the ends thereof, each arm having outwardly extending lugs (32) at the end adjacent the tube and stirrup shaped brackets (33) extending around the tube and attached to the lugs (32).

10. A vehicle bumper as claimed in claim 9, characterised in that further fastening means (37) are provided which attach the bumper mouldings (10) to the brackets/lugs (32).

11. A vehicle bumper as claimed in any of the preceding claims, characterised in that the tube (11) is of hollow square cross-section.

12. A vehicle bumper as claimed in any of the preceding claims, characterised in that the tube is formed from plastics reinforced with glass fibre.

**Patentansprüche**

1. Stossfänger für Fahrzeuge, bestehend aus einem festen, langgestreckten Rohr (11), einer Befestigung (30) zum Befestigen des Rohres an einem Fahrzeug, einem stossfängerförmigen Formteil (10) aus Plastik, das sich entlang des Rohres erstreckt, und einer Befestigungsvorrichtung (15) zum Anbringen des Formteiles am Rohr, um einen Aufprall auf das Formteil auf das Rohr zu übertragen, wobei sowohl die Befestigung (30) als auch die Befestigungsvorrichtung (15) das Rohr enthalten, ohne die Wandung des Rohres zu durchbrechen, dadurch gekennzeichnet, dass die Befestigungsvorrichtung eine Klammer (15) aufweist, die mit der Mitte des Stossfängers verbunden ist und eine Öffnung (15a) aufweist, durch die sich das Rohr erstreckt, um die Klammer auf dem Rohr aufzunehmen und zu halten, wobei die Klammer wenigstens eine Druckwange (15e) neben der Öffnung aufweist, die vom Formteil (10) weg zum Rohr (11) führt, um einen Aufprall auf das Formteil durch die Klammer auf das Rohr zu übertragen.

2. Stossfänger nach Anspruch 1, dadurch gekennzeichnet, dass die Klammer (15) U-förmig gestaltet ist mit einer Basis (15a), die mit dem Zentrum des Formteils (10) verbunden ist und zwei elastischen Armen (15b), die Öffnungen (15c) aufweisen, durch die sich das Rohr (11) erstreckt, wobei die elastischen Arme in ihrem entspannten Zustand einen Winkel bilden, um am Rohr zu greifen, und wobei die Klammer auf dem Rohr montiert wird, indem die Arme parallel zueinander gehalten werden, um das Aufschieben der Klammer auf das Rohr zu ermöglichen.

3. Stossfänger nach Anspruch 2, dadurch gekennzeichnet, dass jeder Arm (15b) eine Druckwange (15e) aufweist, die sich zwischen der Basis (15a) der Klammer und der nächsten Kante der Öffnung (15c) für das Rohr (11) im Arm erstreckt, um einen Aufprall vom Formteil auf das Rohr zu übertragen.

4. Stossfänger nach Anspruch 2 oder 3, dadurch gekennzeichnet, dass die Basis (15a) der Klammer (15) Halter aufweist, um das Formteil und die Klammer zusammenzuhalten.

5. Stossfänger nach Anspruch 4, dadurch gekennzeichnet, dass die Halter eine oder mehrere Nasen (17, 23) an der Klammer aufweisen, die mit einer Arretierung ausgebildet sind, um an einem entsprechenden Teil oder Teilen des Formteiles einzurasten, wodurch Klammer und Formteil zusammengehalten werden.

6. Stossfänger nach Anspruch 4 oder 5, dadurch gekennzeichnet, dass Befestigungsanordnungen (27, 28) angeordnet sind, um ebenfalls das Formteil (10) mit der Klammer (15) zu verbinden.

7. Stossfänger nach einem der Ansprüche 1 bis 6, dadurch gekennzeichnet, dass das Formteil (10) einen längs erstreckenden Flansch (14) an seiner Rückseite aufweist, gegen den das Rohr (11) drückt.

8. Stossfänger nach einem der Ansprüche 1 bis 7, dadurch gekennzeichnet, dass das Formteil (10) in der Draufsicht so gebogen ist, dass die Enden des Rohres (11) gegen die Enden des Formteiles (10) drücken und die Befestigungsvorrichtung (15) die Mitte des Formteiles mit dem Rohr verbindet.

9. Stossfänger nach einem der Ansprüche 1 bis 8, dadurch gekennzeichnet, dass die Befestigung (30) des Rohres (11) am Fahrzeug Ausleger (30) aufweist, die sich in der Nähe der Enden des Rohres quer zu diesen erstrecken, wobei jeder Ausleger an dem dem Rohr zugewandten Ende nach aussen gerichtete Ösen (32) aufweist sowie bügelförmige Schellen (33), die sich um das Rohr herum erstrecken und an den Ösen (32) befestigt werden.

10. Stossfänger nach Anspruch 9, dadurch gekennzeichnet, dass weitere Befestigungsanordnungen (37) vorhanden sind, die das Formteil (10) an den Ösen (32) befestigen.

11. Stossfänger nach einem der Ansprüche 1 bis 10, dadurch gekennzeichnet, dass das Rohr (11) einen hohlen Querschnitt aufweist.

12. Stossfänger nach einem der Ansprüche 1 bis 11, dadurch gekennzeichnet, dass das Rohr (11) aus glasfaserverstärktem Plastik-material besteht.

**Revendications**

1. Pare-chocs de véhicule comprenant un tube rigide allongé (11), un moyen de fixation (30) pour monter le tube sur une carrosserie de véhicule, un moulage (10) en forme de pare-chocs en plastique s'étendant le long du tube et un moyen de montage (15) attachant le moulage au tube pour transmettre un impact sur le moulage au tube, le moyen de fixation et la moyen de montage recevant le tube sans traverser la paroi du tube, caractérisé en ce que le moyen de montage comprend une patte (15) attachée au centre du moulage du pare-chocs et ayant une ouverture (15a) à travers laquelle s'étend le tube pour recevoir et localiser la patte sur le tube, la patte ayant au moins un aboutement (15e) adjacent à l'ouverture et éloigné du moulage (10) du pare-chocs pour porter contre le tube (11) pour transmettre un impact sur le moulage du pare-chocs à travers la patte au tube.

2. Pare-chocs de véhicule selon la revendication 1, caractérisé en ce que la patte (15) comprend une patte en forme de U ayant une base (15a) reliée au moulage (10) du pare-chocs en son centre et deux bras élastiques (15b) ayant des ouvertures (15c) par où s'étend le tube (11), les bras élastiques, à leur condition détendue, étant en angle l'un relativement à l'autre pour serrer le tube, la patte étant assemblée sur le tube en maintenant les bras parallèles pour permettre à la patte de glisser sur le tube.

3. Pare-chocs de véhicule selon la revendication 2, caractérisé en ce que chaque bras (15b) a un aboutement (15e) s'étendant entre la base (15a) de la patte et le bord adjacent de l'ouverture (15c) dans le bras pour le tube (11) pour transmettre l'impact du moulage du pare-chocs au tube.

4. Pare-chocs de véhicule selon la revendication 2 ou la revendication 3, caractérisé en ce que la base (15a) de la patte (15) présente un moyen de serrage pour engager le moulage du pare-chocs et maintenir le moulage à la patte.

5. Pare-chocs de véhicule selon la revendication 4, caractérisé en ce que la moyen de serrage comprend une ou plusieurs languettes (17, 23) sur la patte qui présentent des crans d'arrêt pour s'enclencher avec une ou plusieurs parties espacées correspondantes du moulage du pare-chocs pour maintenir ensemble la patte et le moulage.

6. Pare-chocs pour véhicule selon la revendication 4 ou la revendication 5, caractérisé en ce que des moyens de fixation (27, 28) sont également prévus pour attacher le moulage (10) du pare-chocs à la patte (15).

7. Pare-chocs de véhicule selon l'une quelconque des revendications précédentes, caractérisé en ce que le moulage (10) du pare-chocs a une aile allongée (14) qui s'étend le long de son côté arrière, contre laquelle porte le tube 11.

8. Moulage pour pare-chocs selon l'une quelconque des revendications précédentes, caractérisé en ce que pare-chocs (10) est courbé en regardant en plan de façon que les extrémités du tube (11) portent contre le moulage (10) du pare-chocs vers ses extrémités er ledit moyen de montage (15) relie le centre du moulage du pare-chocs au tube.

9. Pare-chocs de véhicule selon l'une quelconque des revendications précédentes, caractérisé en ce que le moyen de fixation (30) pour monter le tube (11) sur la structure du véhicule comprend des bras (30) qui s'étendent transversalement au tube à proximité de ses extrémités, chaque bras ayant des languettes (32) s'étendant vers l'extérieur à l'extrémité adjacente au tube et des pattes en forme d'étrier (33) s'étendant autour du tube et attachées aux languettes (32).

10. Pare-chocs de véhicule selon la revendication 9, caractérisé en ce que d'autres moyens de fixation (37) sont prévus qui attachent les moulages (10) du pare-chocs aux pattes/languettes (32).

11. Pare-chocs de véhicule selon l'une quelconque des revendications précédentes, caractérisé en ce que le tube (11) a une section transversale carrée creuse.

12. Pare-chocs de véhicule selon l'une quelconque des revendications précédentes, caractérisé en ce que le tube est formé en matière plastique renforcée de fibre de verre.

FIG. 1.

FIG. 2.

FIG. 3.

FIG. 4.

34

14

17

10

5

33

31

35

32

30

13

37

3

0 110 631

FIG. 5.

20

12

19

FIG. 6.

FIG. 7.

FIG. 8.

FIG. 9.